# EUROPEAN PATENT SPECIFICATION

(11) **EP 4 549 265 B1**
(45) Date of publication and mention of the grant of the patent: **09.12.2026**
(21) Application number: 23207075.5
(22) Date of filing: 31.10.2023
(51) Int. Cl.: B60T 8/172, B60W 30/02, B60W 30/18, B60W 40/064, B60W 50/00, B60T 8/1755

(54) **CONTROL SYSTEM AND METHOD FOR ONE PEDAL DRIVE ADAPTATION LIMITING THE EXPECTED UTILIZED FRICTION**
STEUERUNGSSYSTEM UND VERFAHREN ZUR EINPEDAL-ANTRIEBSANPASSUNG MIT BEGRENZUNG DER ERWARTETEN VERWENDETEN REIBUNG
SYSTÈME ET PROCÉDÉ DE COMMANDE POUR ADAPTATION DE COMMANDE À UNE PÉDALE LIMITANT LE FROTTEMENT ATTENDU UTILISÉ

(43) Date of publication of application: 07.05.2025
(73) Proprietor: Volvo Car Corporation, 405 31 Göteborg (SE)
(72) Inventor: Mounzer, Raid, 433 64 Sävedalen (SE); Riikonen, Mikael, 426 51 Västra Frölunda (SE); Idegren, Martin, 411 20 Göteborg (SE); Hammarberg, Magnus, 442 42 Kungälv (SE)
(74) Representative: Nederlandsch Octrooibureau

(56) References cited:
- EP-A2- 1 577 148
- DE-A1- 102019 008 973
- US-A1- 2016 236 672
- US-A1- 2020 254 983

## Description

### Technical Field

The current disclosure relates to a method and/or an apparatus for automatically controlling a deceleration request for a vehicle during one pedal driving.

### Background Art

One pedal drive (OPD) is a popular feature in hybrid and electrical vehicles. When active, releasing the drive pedal will request a deceleration level to be achieved favorably by the electrical motors regenerative braking, and through brake blending between the different deceleration actuators when needed, e.g. friction brakes. The vehicle is requested to strongly accelerate if the drive pedal is deeply depressed, wherein the vehicle is requested to just slightly accelerate if the drive pedal is just depressed a little. Correspondingly, the vehicle is requested to strongly decelerate if the drive pedal is released fully or to a high extent, wherein the vehicle only is requested to decelerate a little, if the drive pedal is only released by a small amount. The level of deceleration requested usually corresponds to the levels most encountered in everyday driving, thus relieving the driver from switching back and forth between the pedal and brake pedal, e.g., during city driving scenarios.

These levels of deceleration are usually high enough to cover most common deceleration needs, but low enough not to cause any vehicle instability in most use cases. However, in certain conditions like driving on lower surface friction or with high lateral acceleration, the deceleration levels requested by the OPD might cause certain wheels to have excessive longitudinal slip. This might lead to the partial or full replacement of regenerative braking with friction braking in vehicles equipped with brake blending.

This excessive longitudinal wheel slip is referred to as the wheel slip level that would cause a significant effect of vehicle behavior and response to driver's inputs.

During most driving scenarios, the deceleration level requested by OPD is easily handleable without causing any vehicle instability or significant change in character. However, when the wheels are already close to their available friction limits (e.g., driving on slippery surfaces or with high lateral acceleration), the additional deceleration torque requested by OPD might cause the wheels to have excessive longitudinal slip, thus reducing the wheels' ability to generate lateral forces. Depending on which wheels (front or rear) become saturated, the vehicle can experience a change in its handling characteristics and its response to driver's inputs and becomes either more understeered or more oversteered.

To counteract this and without this function implemented, the driver must press the pedal to remove the additional deceleration request. However, it is not intuitive for the driver to press the pedal to reduce brakes. Additionally, pressing on the pedal just enough to go out of the situation without overcompensating and losing a significant amount of the available deceleration based on the available friction is a very challenging task.

Other solutions reduce the regenerative braking when slip is detected. However, this might be too late as the vehicle is already unstable. An example thereof is described in US2016/236672 A1.

### Summary

According to a first aspect, the disclosure comprises a method for controlling a deceleration request of a vehicle, the method comprising determining whether a combined friction exceeds a threshold, wherein the combined friction is a combination of a first friction associated with the deceleration request corresponding to a drive pedal position and a second friction associated to a lateral movement of the vehicle, and adjusting the deceleration request based on whether the combined friction exceeds the threshold. This acts as a pre-controller in vehicles that are equipped with a one pedal driving system, a system that can request a deceleration from the vehicle based on a drive pedal position This allows for automatically controlling the deceleration level associated with a deceleration request when a scenario is identified where the friction expected to be utilized by the deceleration request combined with the friction utilized by the lateral movement of the vehicle in that moment exceeds a threshold (maximum available friction).

This will work as a feedforward controller and control the deceleration request to a level that allows the maximum utilization of the available friction without excessive longitudinal or lateral slip. The available friction is given by the threshold and can be calculated in several ways. This will help prevent the wheels from losing their capacity to create lateral forces, and thus it will ensure that the vehicle has more consistent behavior and response to driver input. An additional amount of deceleration request over the maximum available friction can be allowed to accommodate for all uncertainties and prohibit over restricting the deceleration request. The optional feedback controllers can reduce the additional amount of deceleration request if needed. The term OPD refers to a deceleration controller where a drive pedal and a vehicle speed decide the level of deceleration required. A deceleration request from the OPD will decelerate the vehicle to zero speed or creep speed. The drive pedal position decides the level of the deceleration, but no target speed is set based on it.

The step of adjusting the deceleration may comprise decreasing the deceleration request if the expected utilized friction exceeds the threshold.

The deceleration request may not be decreased if a separate braking request from a brake pedal and/or other virtual drivers is detected.

The threshold may be predetermined. The predetermined threshold may be stored in a memory of a vehicle system in the vehicle.

The predetermined value of the threshold may correspond to a specific driving scenario wherein exceeding the threshold is considered to be critical. This increases security in every scenario as the threshold has been calculated for a critical scenario. For instance, the predetermined threshold may be calculated to correspond to a specific driving scenario where over-utilizing the available friction is evaluated to be critical. As a specific example, the threshold may be such that driving with a combined friction close to one corresponding to the limit on high mu is provided. Mu is defined as the friction between the tire and road surface. A high-mu surface is one which produces good braking and steering ability. Dry asphalt is an example of a high-mu surface.

However, the predetermined threshold may be calculated in any other suitable way.

In another embodiment, the threshold may be determined based on the current driving scenario. This provides flexibility and adaptability such that unnecessary limitations of the deceleration request may be avoided. The threshold may be calculated based on the driving scenario and available friction. This method needs further information about the friction and driving scenario to be available to the function. The available friction may be available as an input for the function (externally calculated, cloud information, previously learned, ...) or calculated internally through the different sensors such as the inertial measurement sensors, vehicle speed, wheel speeds, or others. The driving scenario may also be determined through the different sensors such as the inertial measurement sensors, vehicle speed, wheel speeds, or others. The threshold may be determined in any other suitable way.

The threshold may be calculated based on at least one of an inertial measurement sensor, a steering sensor, a vehicle speed, a wheel speed, or road information.

The decrease of the deceleration request may be performed based on a step or a ramp function depending on whether the deceleration request is being applied to the vehicle. This allows to reduce the jerkiness when applying such limitations of deceleration requests. So when a limitation is needed, it can be applied smoothly through a ramp for example. However, since this function acts as a pre-controller, the limitation can occur before the deceleration request is executed. In this case, no ramps will be needed and a step limitation can be allowed.

The combined friction may comprise a lateral component and a longitudinal component. The lateral friction may correspond to the first friction and the longitudinal friction may correspond to the second friction.

The longitudinal component may be calculated based on the deceleration request and a first characteristic of the vehicle and the lateral component may be calculated based on a sensor of the vehicle and a second characteristic of the vehicle. The first characteristic of the vehicle may comprise a weight or a size of the vehicle. The second characteristic of the vehicle may also comprise a weight or a size of the vehicle. In this way, the differences between different models of vehicles can be taken into consideration as the same lateral and longitudinal components of accelerations can create different levels of longitudinal and lateral slip in the vehicle depending on its weight, size, and other physical characteristics.

The combined friction may be determined by respectively applying a first and a second weight to the longitudinal and the lateral component. This allows to balance and adjust the lateral and longitudinal components such that one of them is given more weight than the other, for instance.

The first and second weight may be determined based on a current driving scenario. For instance, the first and second weights may be 0.8 such that the lateral and longitudinal components could be combined with 0.8 weights each to allow the closed loop deceleration request reduction functionalities to control the remaining part for best performance. However, the first and second weights may have any other suitable value.

The method may comprise, after adjusting the deceleration request, increasing the deceleration request if the deceleration request is a certain amount below the threshold.

The disclosure further relates to a system for controlling a deceleration request of a vehicle, the device comprising a control unit configured to receive the deceleration request corresponding to a drive pedal position, calculate a combined friction as a combination of the first friction associated with the deceleration request and a second friction associated to a lateral movement of the vehicle, determine whether the combined friction exceeds a threshold, and decrease the deceleration request if the expected utilized friction exceeds the threshold.

### Brief Description of Drawings

Figure 1 illustrates a block diagram of a vehicle system according to the disclosure.
Figure 2 illustrates a flowchart schematically depicting a method for controlling a deceleration request in a vehicle according to the disclosure.
Figure 3 illustrates a schematically a vehicle wheel and how to weigh lateral and longitudinal forces according to an embodiment of the disclosure.

### Description of Embodiments

As said, the term OPD through the description and claims refers to a deceleration controller where a drive pedal and a vehicle speed decide the level of the deceleration request required. A deceleration request from the OPD will decelerate the vehicle to zero speed or creep speed. The drive pedal position decides the level of the deceleration request, but no target speed is set based on it.

Brake blending is a functionality responsible for distributing the deceleration request to the different actuators capable of decelerating the vehicle (e.g. friction brakes, electrical motors, ...).

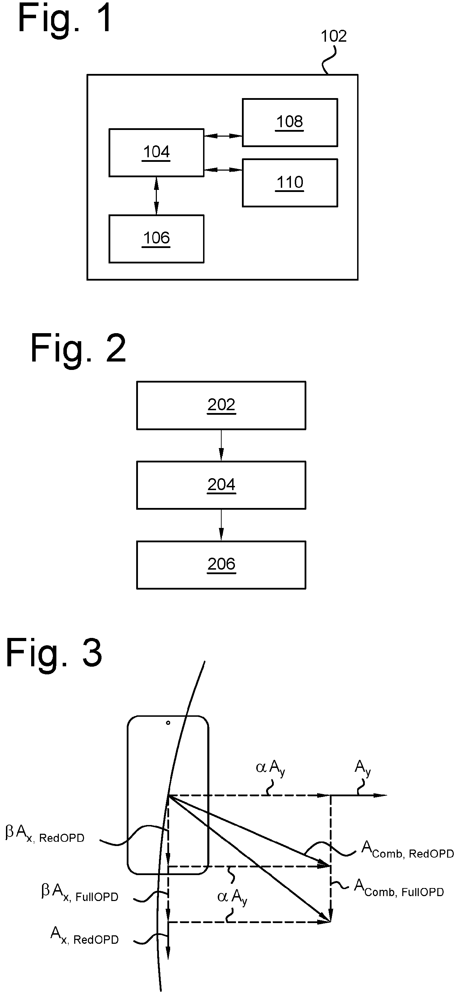

Figure 1 illustrates a block diagram of a vehicle system 102 according to the disclosure. The vehicle system 102 may comprise a processing unit 104, a memory 106, a sensor unit 108, and a communication unit 110. The processing unit 104 is connected to the memory 106, the sensor unit 108, and the communication unit 110. The communication unit 110 may transmit and receive information via Bluetooth, through a wireless communication network, for example, a 4G network, and/or using any other suitable communication technology.

Figure 2 illustrates a flowchart schematically depicting a method for controlling a deceleration request of a vehicle. The method of Figure 2 may be performed by the vehicle system 102 of Figure 1.

In step 202, the method comprises receiving a deceleration request corresponding to a drive pedal position of the vehicle. The deceleration request is received by the processing unit 104 of the vehicle system 102. The deceleration request is generated by a user pressing the drive pedal . The sensor unit 108 may sense the position of the drive pedal, generate the deceleration request based on the drive pedal position, and send the deceleration request to the processing unit 104. Different positions of the drive pedal will generate deceleration requests with different deceleration levels. For instance, lower positions of the drive pedal (user applying more pressure on the drive pedal) will correspond to lower deceleration requests.

After receiving the deceleration request in step 202, the method of Figure 2 proceeds to step 204 wherein the processing unit 104 determines whether a combined friction exceeds a threshold. The combined friction is a combination of a first friction associated with the deceleration level of the deceleration request and a second friction associated to a lateral movement of the vehicle. For instance, higher deceleration requests may be associated to higher first frictions and vice versa. The first friction is the expected friction caused by applying the deceleration request.

The method proceeds after step 204 to step 206 wherein the deceleration request is adjusted by the processing unit 104 based on whether the combined friction exceeds the threshold. For instance, if the method determines in step 204 that the combined friction exceeds the threshold, then the method may reduce the deceleration request such that the combined friction is below the threshold.

The threshold may be designed as follows in different embodiments:
a- A predetermined threshold that corresponds to a specific driving scenario where exceeding the threshold is evaluated to be critical.
b- A threshold that is calculated based on the driving scenario and expected available friction. This method needs further information about the expected available friction and driving scenario to be available to the function.

In some embodiments, the limitation of the deceleration request in step 206 of the method in Figure 2 may be implemented through a ramp or a step depending on whether the deceleration request is currently being applied on the vehicle or not.

In a further embodiment, once the combined friction becomes lower than the threshold by a certain margin, the deceleration request may be allowed to be increased again.

If a driver braking request coming from a brake pedal is detected, no limitation of the deceleration request may be allowed, and any existing limitation may be ramped out.

Although the method of Figure 2 can only limit the deceleration request on a vehicle level, it might be extended to evaluate the deceleration request limits on individual components such as axles or wheels, and then limit the vehicle deceleration request level based on the combination of the individually calculated limits. This becomes more beneficial if the vehicle is equipped with a function that can redistribute the deceleration request between the individual components. That is, wherein a deceleration request will be performed by using different braking systems. For instance, for every component, a combined friction may be calculated and the highest one may be used in step 204 of Figure 2 to compare it with the threshold.

The available friction (threshold) may be available as an input for the method of Figure 2 (for instance, externally calculated, cloud information, previously learned, ...) or calculated internally through the different sensors of the sensor unit 108 such as the inertial measurement sensors, vehicle speed, wheels speeds, or others. The available friction (threshold) may be stored in the memory 106 or received through the communication unit 110.

The combined friction may be calculated in step 204 of Figure 2 as a lateral and a longitudinal component. The lateral component may be available, calculated from the different sensors, or estimated based on characteristics of the vehicles such as weight and size. The characteristics of the vehicle may be inferred from the model of the vehicle. It can also be improved by the expected lateral acceleration once the deceleration request is applied on the vehicle. The longitudinal component may be estimated from the deceleration request and also a characteristic of the vehicle such as weight or size.

In some embodiments, in step 204 of Figure 2, the longitudinal and lateral components may be then combined with different weights depending on the scenario.

Another option would be to consider only the lateral component in the expected utilized friction, by setting the weight of the longitudinal acceleration to zero, and adapt the thresholds accordingly to limit the deceleration request before causing any vehicle destabilization.

Figure 3 shows a diagram depicting vehicle accelerations. The method of Figure 2 may evaluate in step 204 the lateral acceleration Ay expected in the current driving scenario. The method may also evaluate the longitudinal acceleration Ax,FullOPD expected when the full deceleration request received in step 202 is executed. The method may determine the combined friction AComb,FullOPD which is the combined acceleration obtained from the weighted longitudinal and lateral components βAx, FullOPD and αAy. If the AComb,FullOPD exceeds the threshold (available friction) in step 104, the method limits in step 106 the OPD deceleration request to a level where the new AComb,RedOPD does not exceed the available friction. The weights can be tuned and can be scenario dependent.

Those skilled in the art will appreciate that the methods, systems and components described herein may comprise, in whole or in part, a combination of analog and digital circuits and/or one or more appropriately programmed processors (e.g., one or more microprocessors including central processing units (CPU)) and associated memory, which may include stored operating system software, firmware and/or application software executable by the processor(s) for controlling operation thereof and/or for performing the particular algorithms represented by the various functions and/or operations described herein, including interaction between and/or cooperation with each other as well as transmitters and receivers. One or more of such processors, as well as other digital hardware, may be included in a single ASIC (Application-Specific Integrated Circuitry), or several processors and various digital hardware may be distributed among several separate components, whether individually packaged or assembled into a SoC (System-on-a-Chip).

Furthermore, the systems, methods and components described, and/or any other arrangement, unit, system, device or module described herein may for instance be implemented in one or several arbitrary nodes comprised in the host vehicle and/or one or more separate devices. In that regard, such a node may comprise an electronic control unit (ECU) or any suitable electronic device, which may be a main or central node. The systems, components and methods described herein may further comprise any computer hardware and software and/or electrical hardware known in the art configured to enable communication therebetween.

While the disclosure has been described with reference to exemplary embodiments, it will be understood by those skilled in the art that various changes may be made without departing from the scope of the invention, as defined by the appended claims.

## Claims

1. A method for controlling a deceleration request for a vehicle, the method comprising:
receiving (202), by a processing unit (104), the deceleration request corresponding to a drive pedal position of the vehicle;
determining (204), by the processing unit (104), whether a combined friction exceeds a threshold, wherein the combined friction is a combination of a first friction associated with the deceleration request and a second friction associated to a lateral movement of the vehicle;
the method being **characterized by** adjusting (206) the deceleration request based on whether the combined friction exceeds the threshold.

2. The method according to claim 1 wherein the step of adjusting the deceleration request comprises decreasing the deceleration request if the combined friction exceeds the threshold.

3. The method according to claim 2, wherein the deceleration request is not decreased if a separate braking request from a brake pedal and/or other virtual drivers is detected.

4. The method according to any of the preceding claims, wherein the threshold is predetermined.

5. The method of claim 4, wherein the predetermined threshold corresponds to a specific driving scenario.

6. The method of claim 1, wherein the threshold is determined based on a current driving scenario.

7. The method according to claim 6, wherein the threshold is calculated based on at least one of an inertial measurement sensor, a steering sensor, a vehicle speed or a wheel speed.

8. The method according to claim 2 or 3, wherein the step of decreasing the deceleration request is performed based on a step or a ramp function depending on whether the deceleration request is being applied to the vehicle.

9. The method of any of the preceding claims, wherein the combined friction comprises a lateral component and a longitudinal component.

10. The method according to claim 9, wherein the longitudinal component is calculated based on the deceleration request and a first characteristic of the vehicle and the lateral component is calculated based on a sensor of the vehicle and a second characteristic of the vehicle.

11. The method according to claim 10, wherein the first and the second characteristic comprises a weight or a size of the vehicle.

12. The method according to any of claims 9 to 11, wherein the combined friction is determined by respectively applying a first and a second weight to the longitudinal and the lateral component.

13. The method according to claim 12, wherein the first and second weight are determined based on a current driving scenario.

14. The method according to any of the preceding claims further comprising, after adjusting the deceleration request, increasing the deceleration request if the deceleration request is a certain amount below the threshold.

15. The method according to any of the preceding claims wherein the vehicle is equipped with brake blending.

16. A one pedal driving system (102) for controlling a deceleration request for a vehicle, the system comprising:
a processing unit (104) configured to:
receive the deceleration request corresponding to a drive pedal position;
calculate a combined friction as a combination of a first friction associated with the deceleration request and a second friction associated to a lateral movement of the vehicle;
determine whether the combined friction exceeds a threshold;
**characterized in that** the processing unit is further configured to decrease the deceleration request if the combined friction exceeds the threshold.

## Patentansprüche

1. Verfahren zum Steuern einer Verzögerungsanforderung für ein Fahrzeug, wobei das Verfahren Folgendes umfasst:
Empfangen (202) der Verzögerungsanforderung, die einer Fahrpedalposition des Fahrzeugs entspricht, durch eine Verarbeitungseinheit (104);
Bestimmen (204) durch die Verarbeitungseinheit (104), ob eine kombinierte Reibung einen Schwellenwert überschreitet, wobei die kombinierte Reibung eine Kombination einer ersten, der Verzögerungsanforderung zugeordneten Reibung und einer zweiten, einer Querbewegung des Fahrzeugs zugeordneten Reibung ist;
wobei das Verfahren **gekennzeichnet ist durch** Einstellen (206)
der Verzögerungsanforderung basierend darauf, ob die kombinierte Reibung den Schwellenwert überschreitet.

2. Verfahren nach Anspruch 1, wobei der Schritt des Einstellens der Verzögerungsanforderung das Verringern der Verzögerungsanforderung umfasst, wenn die kombinierte Reibung den Schwellenwert überschreitet.

3. Verfahren nach Anspruch 2, wobei die Verzögerungsanforderung nicht verringert wird, wenn eine separate Bremsanforderung von einem Bremspedal und/oder anderen virtuellen Fahrern erfasst wird.

4. Verfahren nach einem der vorhergehenden Ansprüche, wobei der Schwellenwert vorbestimmt ist.

5. Verfahren nach Anspruch 4, wobei der vorbestimmte Schwellenwert einem spezifischen Fahrszenario entspricht.

6. Verfahren nach Anspruch 1, wobei der Schwellenwert basierend auf einem aktuellen Fahrszenario bestimmt wird.

7. Verfahren nach Anspruch 6, wobei der Schwellenwert basierend auf einem Trägheitsmesssensor und/oder einem Lenksensor und/oder einer Fahrzeuggeschwindigkeit und/oder einer Raddrehzahl berechnet wird.

8. Verfahren nach Anspruch 2 oder 3, wobei der Schritt des Verringerns der Verzögerungsanforderung basierend auf einer Sprung- oder einer Rampenfunktion in Abhängigkeit davon durchgeführt wird, ob die Verzögerungsanforderung auf das Fahrzeug angewendet wird.

9. Verfahren nach einem der vorhergehenden Ansprüche, wobei die kombinierte Reibung eine Querkomponente und eine Längskomponente umfasst.

10. Verfahren nach Anspruch 9, wobei die Längskomponente basierend auf der Verzögerungsanforderung und einer ersten Eigenschaft des Fahrzeugs berechnet wird und die Querkomponente basierend auf einem Sensor des Fahrzeugs und einer zweiten Eigenschaft des Fahrzeugs berechnet wird.

11. Verfahren nach Anspruch 10, wobei die erste und die zweite Eigenschaft ein Gewicht oder eine Größe des Fahrzeugs umfassen.

12. Verfahren nach einem der Ansprüche 9 bis 11, wobei die kombinierte Reibung bestimmt wird, indem jeweils eine erste und eine zweite Gewichtung auf die Längs- und die Querkomponente angewendet werden.

13. Verfahren nach Anspruch 12, wobei die erste und die zweite Gewichtung basierend auf einem aktuellen Fahrszenario bestimmt werden.

14. Verfahren nach einem der vorhergehenden Ansprüche, ferner umfassend ein Erhöhen der Verzögerungsanforderung nach dem Einstellen der Verzögerungsanforderung, wenn die Verzögerungsanforderung um einen gewissen Betrag unter dem Schwellenwert liegt.

15. Verfahren nach einem der vorhergehenden Ansprüche, wobei das Fahrzeug mit einer Bremsüberblendung ausgestattet ist.

16. Einpedal-Fahrsystem (102) zum Steuern einer Verzögerungsanforderung für ein Fahrzeug, wobei das System Folgendes umfasst:
eine Verarbeitungseinheit (104), die dazu ausgelegt ist:
die Verzögerungsanforderung zu empfangen, die einer Fahrpedalposition entspricht;
eine kombinierte Reibung als Kombination einer ersten, der Verzögerungsanforderung zugeordneten Reibung und einer zweiten, einer Querbewegung des Fahrzeugs zugeordneten Reibung zu berechnen;
zu bestimmen, ob die kombinierte Reibung einen Schwellenwert überschreitet;
**dadurch gekennzeichnet, dass** die Verarbeitungseinheit ferner dazu ausgelegt ist, die Verzögerungsanforderung zu verringern, wenn die kombinierte Reibung den Schwellenwert überschreitet.

## Revendications

1. Procédé de commande d'une demande de décélération pour un véhicule, le procédé comprenant :
la réception (202), par une unité de traitement (104), de la demande de décélération correspondant à une position de la pédale d'accélérateur du véhicule ;
la détermination (204), par l'unité de traitement (104), du fait qu'un frottement combiné dépasse ou non un seuil, le frottement combiné étant une combinaison d'un premier frottement associé à la demande de décélération et d'un deuxième frottement associé à un mouvement latéral du véhicule ;
le procédé étant **caractérisé par** un réglage (206)
de la demande de décélération selon que le frottement combiné dépasse ou non le seuil.

2. Procédé selon la revendication 1, dans lequel l'étape d'ajustement de la demande de décélération comprend la diminution de la demande de décélération si le frottement combiné dépasse le seuil.

3. Procédé selon la revendication 2, dans lequel la demande de décélération n'est pas diminuée si une demande de freinage séparée provenant d'une pédale de frein et/ou d'autres pilotes virtuels est détectée.

4. Procédé selon l'une quelconque des revendications précédentes, dans lequel le seuil est prédéterminé.

5. Procédé selon la revendication 4, dans lequel le seuil prédéterminé correspond à un scénario de conduite spécifique.

6. Procédé selon la revendication 1, dans lequel le seuil est déterminé sur la base d'un scénario de conduite courant.

7. Procédé selon la revendication 6, dans lequel le seuil est calculé sur la base d'au moins l'un d'un capteur de mesure inertiel, d'un capteur de direction, d'une vitesse du véhicule ou d'une vitesse de roue.

8. Procédé selon la revendication 2 ou 3, dans lequel l'étape de diminution de la demande de décélération est effectuée selon une fonction en escalier ou en rampe, selon que la demande de décélération est appliquée ou non au véhicule.

9. Procédé selon l'une quelconque des revendications précédentes, dans lequel le frottement combiné comprend une composante latérale et une composante longitudinale.

10. Procédé selon la revendication 9, dans lequel la composante longitudinale est calculée sur la base de la demande de décélération et une première caractéristique du véhicule et la composante latérale est calculée sur la base d'un capteur du véhicule et d'une deuxième caractéristique du véhicule.

11. Procédé selon la revendication 10, dans lequel la première et la deuxième caractéristiques comprennent un poids ou une taille du véhicule.

12. Procédé selon l'une quelconque des revendications 9 à 11, dans lequel le frottement combiné est déterminé en appliquant respectivement un premier et un second poids à la composante longitudinale et à la composante latérale.

13. Procédé selon la revendication 12, dans lequel le premier et le second poids sont déterminés sur la base d'un scénario de conduite courant.

14. Procédé selon l'une quelconque des revendications précédentes, comprenant en outre, après ajustement de la demande de décélération, l'augmentation de la demande de décélération si la demande de décélération est d'une certaine quantité inférieure au seuil.

15. Procédé selon l'une quelconque des revendications précédentes, dans lequel le véhicule est équipé d'un système de répartition de la force de freinage.

16. Système de conduite à une seule pédale (102) destiné à commander une demande de décélération d'un véhicule, le système comprenant :
une unité de traitement d'image (104) configurée pour :
recevoir la demande de décélération correspondant à une position de pédale d'accélérateur ;
calculer un frottement combiné sous la forme d'une combinaison d'un premier frottement associé à la demande de décélération et d'un deuxième frottement associé à un mouvement latéral du véhicule ;
déterminer si le frottement combiné dépasse ou non un seuil ;
**caractérisé en ce que** l'unité de traitement est en outre configurée pour diminuer la demande de décélération si le frottement combiné dépasse le seuil.
